# EUROPEAN PATENT APPLICATION

(11) **EP 1 201 491 A2**
(43) Date of publication of application: **02.05.2002**
(21) Application number: 01116626.1
(22) Date of filing: 12.07.2001
(51) Int. Cl.: B60N 2/48

(54) **Vehicle interior material particularly for headrests**

(30) Priority: 27.09.2000 JP 2000295073
(71) Applicant: INOAC CORPORATION, Nagoya-shi Aichi-ken (JP)
(72) Inventor: Sakakibara, Yukihiro, Inoac Corp., Anjo Works, Anjo-shi, Aichi (JP); Ohyama, Tetsuo, Inoac Corp., Anjo Works, Anjo-shi, Aichi (JP)
(74) Representative: HOFFMANN - EITLE

(57) **Abstract**

The energy absorptivity of an impact absorbing member provided in a vehicle interior material is set in the range of 40% or more, and the ventilation quantity is set in the range from 10 to 60 ml/cm² · sec.

## Description

### BACKGROUND OF THE INVENTION

### 1. Field of the Invention

The present invention relates to a vehicle interior material, more specifically to a vehicle interior material such as a headrest and the like provided with an impact absorbing member which can reduce impact applied to passengers in a bump accident and the like.

### 2. Description of the Related Art

In order to protect passengers by absorbing and relaxing extraneous impact caused by a bump accident of a vehicle and the like, there are used cushioning interior materials such as a headrest mounted to upper part of a sheet back, a cushioning material provided inside pillars, and the like.

As the cushioning member used for vehicle interior materials typified by a headrest, impact absorbing members are listed such as a cushion and the like placed on a region to which a body of a passenger is pressed in occurrence of an accident and the like. The impact absorbing member causes effective absorption and dispersion of impact energy applied from outside by generating compression and cracking, and deformations such as buckling and the like by the extraneous impact energy, leading to protection of passengers from the impact.

For attaining effective impact absorption by the impact absorbing members, it may be advantageous to control counter impact as low as possible, the counter impact being generated as a result of absorption of extraneous impact applied via a passenger in bump and rebound generated by remaining impact which has not been absorbed by the impact absorbing member. Since this is in reverse proportion to compression and cracking, and the amount of deformations such as buckling and the like of the impact absorbing member, it maybe advantageous to control the volume of the impact absorbing member as large as possible. However, when a limited space such as in a vehicle is taken into consideration, the size of the impact absorbing member is accordingly limited, as a result, there are adopted impact absorbing materials composed of amaterial and having a structure easily causing compression and cracking, and deformations such as buckling and the like.

However, when these deformations are dependent on cracking and buckling, particularly a part installed integrally in a vehicle gives a defect of a significant job in exchange thereof and the like, since one-way use is basically presupposed. Therefore, a method of absorbing energy in impact by compression deformation using, for example, a material easily manifesting elastic deformation, is desirable also from the standpoint of resource saving hereafter, and the like.

Then, to realize elastic deformation of an impact absorption member which can not get large volume, for absorbing extraneous impact applied to a passenger while decreasing counter impact returned in the form of rebound, it may be advantageous to absorb energy effectively, namely, to approximate the speed from contact of the passenger with the impact absorbing member until complete compression to zero and to decrease the form recovering speed of the impact absorbing member. Such a condition is attained by decreasing the elastic modulus of the impact absorbing member, however, in this case, sufficient rigidity as a vehicle interior material can not be secured under usual use, and in the case of a member to which a passenger is always pressed such as a headrest and the like, a defect of deterioration in use comfortableness is indicated.

### SUMMARY OF THE INVENTION

The present invention has been made in view of the problems inherent in conventional vehicle interior materials and suggested to solve the problems, and an object thereof is to provide a vehicle interior material which can satisfy various physical properties like use comfortableness and the like such as touch feeling and the like, and simultaneously an ability to absorb impact energy generated in an accident and the like.

According to the present invention, there is provided a vehicle interior material for absorbing and relaxing impact applied to passengers in vehicle crash, wherein the energy absorptivity of an impact absorbing member provided in the vehicle interior material is set in the range of 40% or more, and ventilation quantity is set in the range from 10 to 60 ml/cm² · sec.

### BRIEF EXPLANATION OF THE DRAWINGS

Fig. 1 is a sectional view of a headrest as a vehicle interior material according to an embodiment of the invention.

Fig. 2 is a sectional view of a headrest as a vehicle interior material according to another embodiment of the invention.

Fig. 3 is a schematic view of a measuring apparatus used in JIS K 6401 according to an experimental example.

Fig. 4 is a schematic view of a fragile type tester used in JIS L 1096 according to an experimental example.

Fig. 5 is a load-deflection amount correlation diagram used for calculating energy absorptivity in the experimental example.

Fig. 6 is a graph showing a relation of energy absorptivity and ventilation quantity obtained in an experimental Example 2.

### DETAILED DESCRIPTION OF THE PRESENT INVENTION

Next, a vehicle interior material of the present invention will be described below by suitable embodiments, with reference to the accompanying drawings. It is known, from knowledge and the like obtained to date, that an energy absorptivity in impact of 40% or more, suitably of 60% or more is necessary for sufficiently relaxing an influence on passengers in crash.

Consequently, a property required for a vehicle interior material as an impact absorbing member is to absorb at least about 40 to 60% of impact energy applied from outside in collision of a passenger to a vehicle interior material in an accident and the like. As specific physical properties necessary for securing and obtaining this property, there are listed elastic strength, hardness and the like which can satisfy comfortableness in usual use and energy absorbing property in generation of impact simultaneously. The elastic strength herein referred to can be represented as a ratio of stress on the impact absorbing member to strain thereof, namely, as easiness to cause reversible deformation of the impact absorbing member obtained by elastic modulus and degree of manifestation of this elastic modulus. The elastic modulus has a relation to the number of pores in the impact absorbing material, namely, porosity (the amount of aggregates per unit volume forming a core material) and to the strength of aggregate part of the cell skeleton. The manifestation degree of elastic modulus has a relation to easiness of air in an impact-absorbing member disturbing manifestation of the elastic modulus to pass through into outside, namely, degree of communication of the pore. The hardness may advantageously have a value which does not disturb usual use.

As described above, elastic modulus has a relation with porosity and aggregate strength of cell skeleton and can be evaluated by their values, and when actual use is envisaged, specific evaluation is supposed to be possible by using as an index a form-recovering force after compression deformation by input from outside, considering that an impact absorbing member manifesting a behavior such as complete inelastic collision is most excellent.

As an index representing the form-recovering force, repulsion elastic modulus (%) defined in "JIS K 6401" (namely, ratio of the amount of input energy in compressing an impact absorbing member to the amount of output energy in recovering (proportion of structurally absorbable energy)) is suitable, and adopted also in the present invention. For example, when this value is excellent in a headrest, generation of whiplash injury and the like can be reduced by absorbing generated impact by reception thereof by a passenger, while suppressing rebound against the passenger due to its form recovery.

The present inventors have found that as an index representing the degree of communication, ventilation quantity (ml/cm² · sec) defined in "JIS K 1096" (namely, ventilation quantity of a gas per unit time and area) is suitable, and have adopted this value.

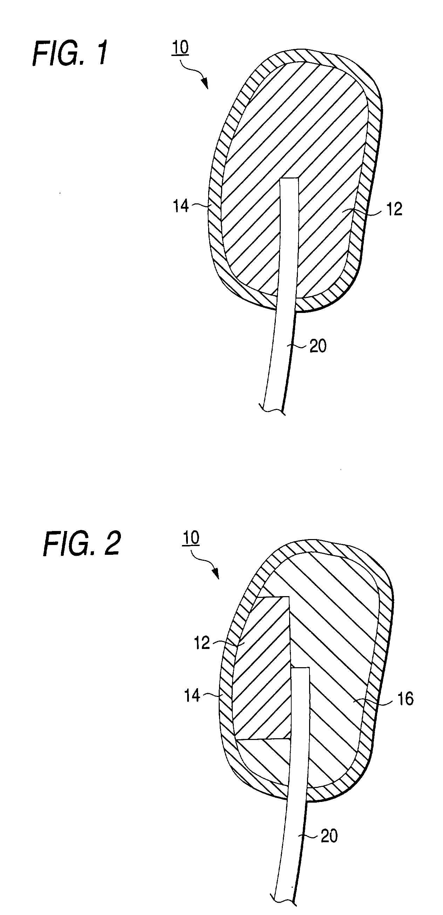

A headrest 10 according to the embodiment of the present invention is constituted basically of a stay 20 engaged to a sheet not shown, an impact absorbing member 12 as a core material constituting the main body part, being molded to cover necessary parts of this stays, and a skin material 14 covering the surface of this impact absorbing member 12, as shown in Fig. 1. The stay 20 is a member which fixes the headrest 10 to a sheet in a height-controllable manner and is used as a base part in manufacturing the impact absorbing member 12. Further, in addition to a headrest adopted as the embodiment here, the present invention can also be preferably adopted in vehicle interior materials such as, for example, a pillar guard placed beside a passenger, a knee pad placed in front of knee, and the like.

The impact absorbing member 12 is a formedmaterial shaped into given form from an elastic foamed body, and as this elastic foamed body, a polyurethane foam which has high degree of freedom in form and can easily change the various physical properties such as porosity and the like is suitably used.

It has been found that for the elastic foamed body to obtain an energy absorptivity of about 40 to 60% or more, the repulsion elastic modulus is 40% or less, and simultaneously the ventilation quantity is in the range of 10 to 60 ml/cm² · sec.

It has been believed that the repulsion elastic modulus preferably has a value of about 50% from the standpoints of comfortableness in use, namely, touch feeling, and the like, however, it has been found that even if it is 40% or less, both of comfortableness in use and energy absorptivity can be satisfied at high levels. When the repulsion elastic modulus is over 40%, the energy absorptivity is less than 40%, causing a fear of insufficient function as an impact absorbing member.

It is necessary that the ventilation quantity is in the range from 10 to 60 ml/cm² · sec, preferably from 35 to 50 ml/cm² · sec. When this value is less than 10 ml/cm² · sec, namely when the impact absorbing member 12 has a structure composed solely of closed cells or containing a small proportion of open cells, the repulsion elastic modulus is 40% or less, and even if energy absorption is structurally possible, a gas such as air and the like confined inside performs a function of cushioning, resultantly, the energy absorptivity decreases, obtaining no desired result. On the other hand, when the ventilation quantity is over 60 ml/cm²·sec, comfortableness in usual use deteriorates significantly, and in recovering the impact absorbing member 12, a gas is easily incorporated, momentary manifestation of structural repulsion elastic modulus owned by cell skeleton itself of the impact absorbing member is not disturbed, and the energy absorptivity lowers to the contrary, requiring a caution.

When the proportion of open cells is small, a gas discharged from the inside of the impact absorbing member 12 in recovering form after compression deformation does not return, consequently, wrinkle and the like generated in deformation itself or compression deformation does not recover and problems occur in touch feeling and appearance aspects.

As the skin material 14 covering the surface of the impact absorbing member 12, any of conventionally known materials can be used.

### Producing Method

The impact absorbing member 12 used in a vehicle interior material such as the headrest 10 and the like is produced according to a conventional known method by mixing a polyol, isocyanate and various catalysts, foam controlling agent, and/or various additives such as a cell opener and the like with water at a given ratio, foaming the mixture and molding it into desired form.

The ventilation quantity is attained by adding 0.3 to 1.0 part by weight of a foam controlling agent, 0.3 to 1.0 part by weight of a catalyst and/or 0.5 to 1.5 parts by weight of a cell opener based on 100 parts by weight of a polyol component, main raw material of the polyurethane foam and the like. As the foam controlling agent, for example, silicone is preferable, and as the catalyst, for example, tertiary amines and the like are preferable, respectively. Particularly addition of the cell opener is effective for securing desired ventilation quantity, and a polyalkyleneoxypolyol and the like are preferable. In addition, there are methods of removal, according to a physical method, impact by explosion under restriction or dissolution, of a cell surface film foamed after molding a product.

In order to attain the repulsion elastic modulus, there are listed methods of formation of a fine cell skeleton, improvement in ability to relax stress in a hard segment and/or use of a polyol having high OHV (the amount of hydroxyl groups), and the like, and specifically, the repulsion elastic modulus is attained by use of a low active silicone, use of an isocyanate having molecular softness and/or use of a polyol having low number-average molecular weight.

### Another Embodiment

In the embodiment, all of inner parts coated with the skin material 14, namely, almost all of the headrest 10 is composed of the impact absorbing member 12, however, a structure as shown in Fig. 2 may also be possible in which an impact absorbing member 12 is used only in part at given position, and other parts are composed of a usual foamed body 16.

### Experimental Examples

The following experimental examples show changes of ventilation quantity and energy absorptivity depending on the addition amount of a cell opener in a vehicle interior material of the example, and relations of the ventilation quantity, repulsion elastic modulus and energy absorptivity.

The following methods were used to measure physical values of repulsion elastic modulus, ventilation quantity and energy absorptivity, respectively, in impact absorbing members obtained from given compositions by a known production method and impact absorbing members so produced as to obtain given physical properties.

### (Repulsion elastic modulus)

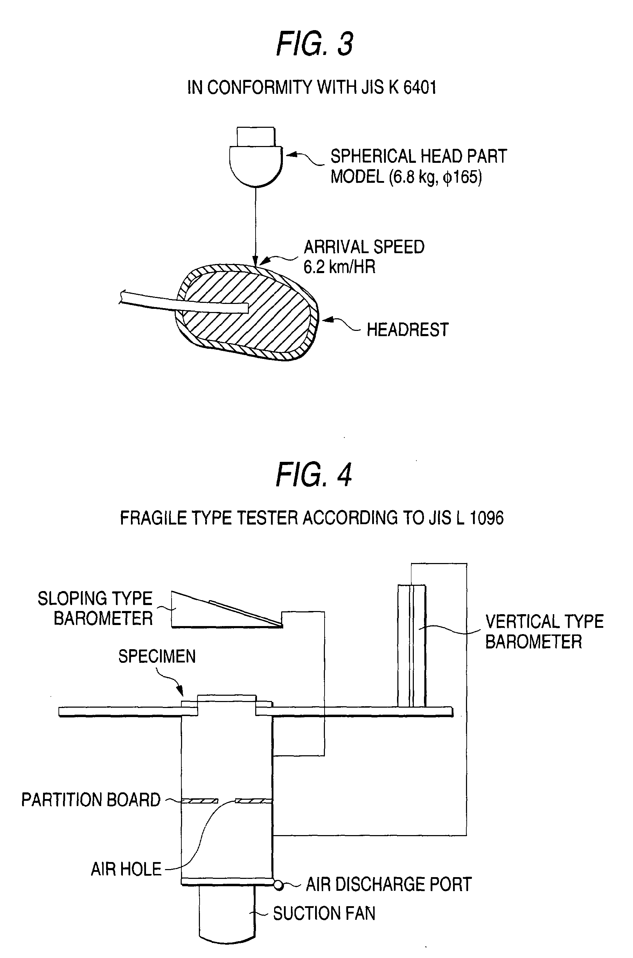

A headrest having usual form was made using the resulted impact absorbing member, and repulsion elastic modulus was measured according to "JIS J 6401" . That is, as shown in Fig. 3, the headrest was fixed at given position, then, a spherical head part model of φ 165 having a weight of 6.8 kg is allowed to fall toward the headrest at a speed in collision of 6.2 km/hr, and repulsion elastic modulus is measured from the fallen distance and rebound distance of the spherical head part model in this action.

### (Ventilation quantity)

A headrest having usual form was made using the resulted impact absorbing member, and ventilation quantity was measured according to "JIS L 1096" . That is, five specimens in total having suitable sizes are taken out from different regions of the headrest, and ventilation quantity is measured as follows using a given fragile type tester as shown in Fig. 4.

The specimen is fitted on the fragile type tester, so sucked that a sloping type barometer shows a mercury pressure of 1.27 cm, and the suction fan is controlled and ventilation quantity is calculated from the pressure indicated by a vertical type barometer and the kind of an air hole used, using the appended table.

### (Energy Absorptivity)

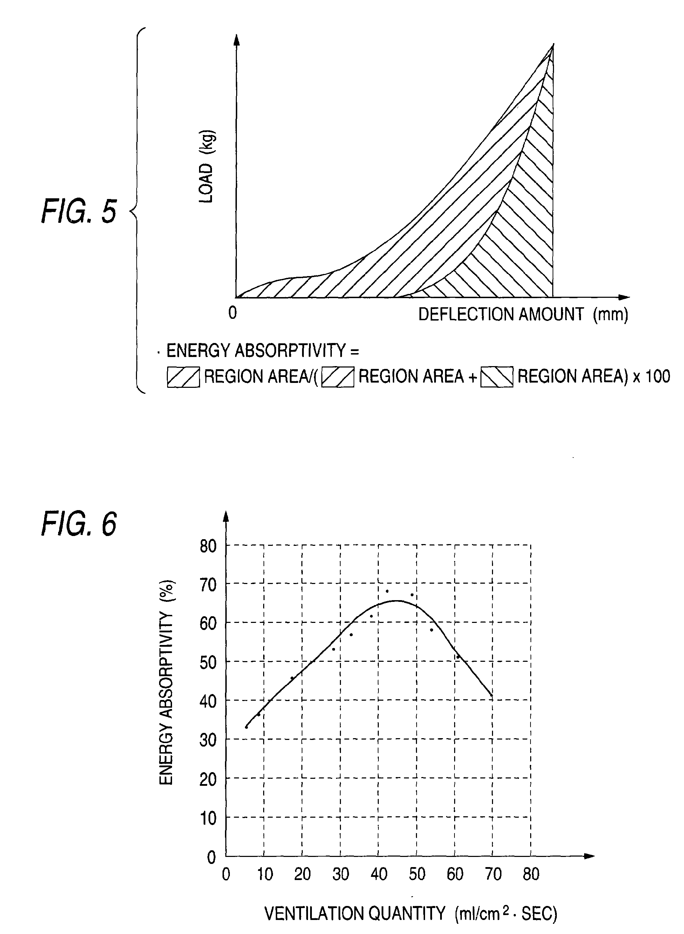

Energy absorptivity is obtained from the area of a load-deflection amount correlation diagram as shown in Fig. 5 obtained from load applied to a headrest and deflection amount thereof in the measurement of repulsion elastic modulus.

### Experiment 1

Headrests were made from impact absorbing members obtained from compositions A to C shown in the following Table 1, according to a conventional polyurethane foam production method, and various physical values were measured, to give results as shown in the following Table 2. It was known from these results that ventilation quantity can be easily controlled only by change in the addition amount of a cell opener, and energy absorption amount varies depending on the ventilation quantity.

**Table 1**

| | A | B | C |
|---|---|---|---|
| Polyol | 100 | 100 | 100 |
| Isocyanate | 80 | 80 | 80 |
| Catalyst A | 1.0 | 1.0 | 1.0 |
| Catalyst B | 0.5 | 0.5 | 0.5 |
| Foam controlling agent | 0.3 | 0.3 | 0.3 |
| Cell opener | 0.5 | 1.0 | 1.5 |
| Water | 4.0 | 4.0 | 4.0 |

- Polyol:: General polyol
- Isocyanate:: General isocyanate
- Catalyst A:: Trade name: Dabco 33LV, manufactured by Sankyo Air Products K.K.
- Catalyst B:: Trade name: Niax A-1, manufactured by Union Carbide Japan K.K.
- Foam controlling agent:: Trade name SF-2961, manufactured by Toray Dow Corning Silicone K.K.
- Cell opener:: Trade name: EP-505S, manufactured by Mitsui Toatsu Chemicals, Inc.

**Table 2**

| | A | B | C |
|---|---|---|---|
| Repulsion elastic modulus (%) | 26 | 25 | 25 |
| Ventilation quantity (ml/cm² · sec) | 28.80 | 38.00 | 42.10 |
| Energy absorptivity (%) | 53.5 | 61.1 | 68.5 |

### Experiment 2

The same compositions as in Example 1 were used, and various physical properties were measured by controlling production conditions such as temperature and the like, and the addition amount of the cell opener, and the like while changing only ventilation quantity, to obtain results as shown in the following Table 3. Based on these results, a relation of energy absorptivity and ventilation was graphed to confirm a maximum value of the energy absorptivity in the range of ventilation quantity from 40 to 50 ml/cm² · sec as shown in Fig. 6, and to find that sufficient energy absorptivity is not secured when the ventilation quantity is less than 10 ml/cm² · sec and over 60 ml/cm² · sec, even at the same repulsion elastic modulus.
(0034)

**Table 3**

| | | | | | | |
|---|---|---|---|---|---|---|
| | No.1 | No.2 | No.3 | No.4 | No.5 | No.6 |
| Repulsion elastic modulus (%) | 27 | 27 | 27 | 26 | 25 | 25 |
| Ventilation quantity (ml/cm² ^{.} sec) | 6.2 | 8.5 | 17.2 | 28.8 | 33.1 | 38.0 |
| Energy absorptivity (%) | 33.1 | 36.2 | 45.8 | 53.5 | 57.7 | 31.1 |
| | No.7 | No.8 | No.9 | No.10 | No.11 | |
| Repulsion elastic modulus (%) | 25 | 27 | 27 | 28 | 28 | |
| Ventilation quantity (ml/cm² ^{.} sec) | 42.1 | 49.0 | 53.2 | 61.1 | 69.3 | |
| Energy absorptivity (%) | 68.5 | 67.9 | 58.2 | 51.1 | 42.1 | |

### Experiment 3

Compositions were produced using the compositions as in Example 1 as base compositions except that production conditions such as temperature and the like, the number-average molecular weight of a polyol component and/or the addition amount of a cell opener were changed, and various physical properties were measured while varying repulsion elastic modulus and ventilation quantity approximately proportionally, to give results shown in Table 4. Namely, it was found that, depending on ventilation quantity, energy absorptivity is low even if repulsion elastic modulus is as low as less than 30% and energy absorptivity is sufficient even if repulsion elastic modulus is around 40%.

**Table 4**

| | | | | |
|---|---|---|---|---|
| | No.1 | No.2 | No.3 | No.4 |
| Repulsion elastic modulus (%) | 27 | 25 | 31 | 33 |
| Ventilation quantity (ml/cm² ^{.} sec) | 8.0 | 33.0 | 33.1 | 38.0 |
| Energy absorptivity (%) | 39.1 | 57.1 | 57.7 | 61.1 |
| | No.5 | No.6 | No.7 | No.8 |
| Repulsion elastic modulus (%) | 35 | 38 | 40 | 45 |
| Ventilation quantity (ml/cm² ^{.} sec) | 43.0 | 41.0 | 46.0 | 47.0 |
| Energy absorptivity (%) | 67.5 | 54.5 | 47.1 | 38.1 |

As described above, according to a vehicle interior material of the present invention, comfortableness in usual use can be maintained, in addition, sufficient impact absorptivity can be manifested and the outer form as a product can easily be kept even after absorption of impact.

## Claims

1. A vehicle interior material for absorbing and relaxing impact applied to a passenger in vehicle crash, the vehicle interior material comprising an impact absorbing member,
wherein the energy absorptivity of the impact absorbing member is set in the range of 40% or more, and the ventilation quantity thereof is set in the range from 10 to 60 ml/cm² · sec.

2. The vehicle interior material according to claim 1 wherein the impact absorbing member is a polyurethane foam.

3. The vehicle interior material according to claim 1, wherein the repulsion elastic modulus of the impact absorbing member is 40% or less.

4. The vehicle interior material according to claim 1, wherein the ventilation quantity of the impact absorbing member is in the range from 35 to 50 ml/cm² · sec.

5. A head rest comprising:
an impact absorbing member for absorbing and relaxing impact applied to a passenger in vehicle crash; and
a skin covering the impact absorbing member;
wherein the energy absorptivity of the impact absorbing member is set in the range of 40% or more, and the ventilation quantity thereof is set in the range from 10 to 60 ml/cm² · sec.

6. The headrest according to claim 5, further comprising a foamed layer disposed adjacent to the impact absorbing member and covered with the skin.

7. The headrest according to claim 5, wherein the impact absorbing member is a polyurethane foam.

8. The headrest according to claim 5, wherein the repulsion elastic modulus of the impact absorbing member is 40% or less.

9. The headrest according to claim 5, wherein the ventilation quantity of the impact absorbing member is in the range from 35 to 50 ml/cm²·sec.
